(19) Europäisches Patentamt
European Patent Office
Office européen des brevets

(11) **EP 4 179 307 B1**

(12) **EUROPÄISCHE PATENTSCHRIFT**

(45) Veröffentlichungstag und Bekanntmachung des Hinweises auf die Patenterteilung:
**22.05.2024  Patentblatt 2024/21**

(21) Anmeldenummer: **21735242.6**

(22) Anmeldetag: **21.06.2021**

(51) Internationale Patentklassifikation (IPC):
**G01N 29/32** *(2006.01)*      **G01N 29/02** *(2006.01)*
**G01N 29/036** *(2006.01)*

(52) Gemeinsame Patentklassifikation (CPC):
**G01N 29/022; G01N 29/036; G01N 29/326;**
G01N 2291/021; G01N 2291/02818;
G01N 2291/0427; G01N 2291/2697

(86) Internationale Anmeldenummer:
**PCT/EP2021/066742**

(87) Internationale Veröffentlichungsnummer:
**WO 2022/008212 (13.01.2022 Gazette 2022/02)**

(54) **VORRICHTUNG ZUM BESTIMMEN ERSTENS EINER WÄRMELEITFÄHIGKEIT UND/ODER DER SPEZIFISCHEN WÄRMEKAPAZITÄT EINES GASGEMISCHS UND ZWEITENS EINER DICHTE UND/ODER EINER VISKOSITÄT DES GASGEMISCHS**

DEVICE FOR DETERMINING FIRSTLY A HEAT CONDUCTIVITY AND/OR THE SPECIFIC HEAT CAPACITY OF A GAS MIXTURE, AND SECONDLY A DENSITY AND/OR A VISCOSITY OF THE GAS MIXTURE

DISPOSITIF DE DÉTERMINATION TOUT D'ABORD D'UNE CONDUCTIVITÉ THERMIQUE ET/OU DE LA CAPACITÉ THERMIQUE MASSIQUE D'UN MÉLANGE GAZEUX ET ENSUITE D'UNE DENSITÉ ET/OU D'UNE VISCOSITÉ DU MÉLANGE GAZEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2020   DE 102020118341**
**09.10.2020   DE 102020126601**

(43) Veröffentlichungstag der Anmeldung:
**17.05.2023   Patentblatt 2023/20**

(73) Patentinhaber: **TrueDyne Sensors AG**
**4153 Reinach (CH)**

(72) Erfinder:
• **MEHDAOUI, Alexandre**
  **4058 Basel (CH)**
• **HUBER, Christof**
  **3007 Bern (CH)**
• **BADARLIS, Anastasios**
  **4127 Birsfelden (CH)**
• **RITTER, Josua**
  **4153 Reinach (CH)**

(74) Vertreter: **Hahn, Christian**
**Endress+Hauser Group Services**
**(Deutschland)AG +Co. KG**
**Colmarer Straße 6**
**79576 Weil am Rhein (DE)**

(56) Entgegenhaltungen:
**US-A1- 2016 290 849**

• **Huber Dr Christof ET AL: "Gas Density and Viscosity Measurement with a Microcantilever for Online Combustion Gas Monitoring", , 27. Juni 2018 (2018-06-27), Seiten 34-37, XP055837027, Gefunden im Internet: URL:https://ieeexplore.ieee.org/stampPDF/g etPDF.jsp?tp=&arnumber=8436145&ref=aHR0c HM 6Ly9pZWVleHBsb3JlLmllZWUub3JnL2RvY3VtZ W50L zg0MzYxNDU= [gefunden am 2021-09-02]**

- HAITAO YU ET AL: "Resonant-cantilever bio/chemical sensors with an integrated heater for both resonance exciting optimization and sensing repeatability enhancement; Resonant-cantilever bio/chemical sensors with an integrated heater", JOURNAL OF MICROMECHANICS AND MICROENGINEERING, INSTITUTE OF PHYSICS PUBLISHING, BRISTOL, GB, Bd. 19, Nr. 4, 1. April 2009 (2009-04-01), Seite 45023, XP020153390, ISSN: 0960-1317, DOI: 10.1088/0960-1317/19/4/045023

**Beschreibung**

Die vorliegende Erfindung betrifft eine Vorrichtung zum Bestimmen erstens einer Wärmeleitfähigkeit und/oder der spezifischen Wärmekapazität eines Gasgemischs und zweitens einer Dichte und/oder einer Viskosität des Gasgemischs. Auf der Basis von Dichte und Viskosität lässt sich über Korrelationsverfahren der Energiegehalt oder der Wobbe-Index eines Brenngasgemischs bestimmen, wie beispielsweise in der internationalen Veröffentlichung WO 2017 063 795 A1 beschrieben ist. Eine mikrosystemtechnische Vorrichtung zum Ermitteln der Viskosität und der Dichte sowie einer Spurengaskonzentration bzw. der Feuchte eines Gases ist beispielsweise in der noch unveröffentlichten Patentanmeldung DE 10 2019 123 874.9 offenbart. Huber et al. beschreiben eine Dichte- und Viskositätsmessung mittels eines Cantilever-Schwingers in Kombination mit einer thermischen Leitfähigkeitsmessung zur Online-Überwachung eines mit Wasserstoff angereicherten Brenngases (ISBN 978-3-8007-4683-5, Seite 34) Die Veröffentlichung US 2016 / 0290849 A1 offenbart eine Vorrichtung mit einem thermischen Sensor zur Bestimmung von Wärmeleitfähigkeit, Temperaturleitfähigkeit und/oder spezifischer Wärmekapazität des Messmediums und mit einem zweiten vibronischen Sensor zur Bestimmung der Viskosität und/oder Dichte des Messmediums.

Auf Basis der obigen Parameter Dichte und Viskosität alleine ist jedoch der Einfluss von Wasserstoff nicht hinreichend genau zu berücksichtigen. Das ist unproblematisch, solange Wasserstoff in den zu untersuchenden Gasgemischen vernachlässigbar ist. Diese Bedingung ist bei der absehbar steigenden Bedeutung von Wasserstoff seltener erfüllt. Wenn aber zusätzlich die Wärmeleitfähigkeit des Gasgemischs ermittelt wird, kann auch der Wasserstoffanteil korrekt bestimmt werden, wie in der internationalen Veröffentlichung WO 2018 082 875 A1 beschrieben ist. Ein Apparatesystem zur Ermittlung der Dichte eines Gasgemischs mit einem vibronischen Sensor und weiterer Parameter des Gasgemischs, darunter auch der Wärmeleitfähigkeit mit jeweils einem externen Sensor ist in der Veröffentlichung WO 2017 131 670 A1 offenbart. Das dort beschriebene System hat jedoch einen großen Platzbedarf und ist für eine Vielzahl von Anwendungen zu teuer. Es ist daher die Aufgabe der vorliegenden Erfindung, hier Abhilfe zu schaffen.

Die Aufgabe wird gelöst durch die Vorrichtung gemäß dem unabhängigen Patentanspruch 1.

Die erfindungsgemäße Vorrichtung zum Bestimmen erstens einer Wärmeleitfähigkeit und/oder der spezifischen Wärmekapazität eines Gasgemischs und zweitens einer Dichte und/oder einer Viskosität des Gasgemischs umfasst: einen aus einem Halbleiterwafer, insbesondere einem SOI-Wafer präparierten Chip mit zumindest einem ersten schwingfähigen Kragbalken mit einem ersten piezoelektrischen Wandler, der zum Anregen einer Schwingung des Kragbalkens mit einer ersten Frequenz dient, wobei der Chip eine Ausnehmung aufweist, in welche Ausnehmung der erste Kragbalken mit einem schwingfähigen freien Endabschnitt kragt; zumindest ein in dem freien Endabschnitt des ersten Kragbalkens ausgebildetes erstes kragbalkenseitiges Temperatursensorelement mit einem temperaturabhängigen Widerstandswert zum Erfassen einer Temperatur des Gasgemischs; zumindest ein beabstandet von dem ersten Kragbalken angeordnetes zweites Temperatursensorelement mit einem temperaturabhängigen Widerstandswert zum Erfassen einer Temperatur des Gasgemischs; zumindest ein in dem freien Endabschnitt des Kragbalkens ausgebildetes erstes Heizelement, wobei zwischen dem ersten Heizelement und dem zweiten Temperatursensorelement, zumindest ein Abschnitt der Ausnehmung verläuft; und eine Auswerte- und/oder Recheneinheit, die dazu eingerichtet ist, anhand der Schwingungseigenschaften des Kragbalkens die Dichte und Viskosität des Gasgemischs zu bestimmen, und anhand von Temperaturmesswerten des ersten kragbalkenseitigen Temperatursensorelements und des zweiten Temperatursensorelements sowie der Leistungsaufnahme des Heizelements die Wärmeleitfähigkeit und/oder die spezifische Wärmekapazität des Gasgemischs zu bestimmen.

Die Bestimmung zweier thermophysikalischer Größen, also sowohl der Wärmeleitfähigkeit als auch der spezifischen Wärmekapazität ergibt einerseits eine gewisse Redundanz bei der Bestimmung des Brennwerts, und damit eine erhöhte Verlässlichkeit. Grundsätzlich steht damit bei der Bestimmung der Zusammensetzung von binären, ternären oder gar quaternären Gasgemischen im Vergleich zum Verfahren gemäß WO 2018 082 875 A1 ein weiterer Hinweis auf die involvierten Gase und deren Konzentrationen zur Verfügung, was eine genauere Bestimmung der Gaszusammensetzung ermöglicht.

In einer Weiterbildung der Erfindung weist der der Chip einen zweiten schwingfähigen Kragbalken auf mit einem zweiten piezoelektrischen Wandler, der zum Anregen einer Schwingung mit einer zweiten Frequenz dient, wobei der zweite Kragbalken mit einem schwingfähigen freien Endabschnitt in die Ausnehmung kragt, und dem Gasgemisch aussetzbar ist.

In einer Weiterbildung der Erfindung ist in dem freien Endabschnitt des zweiten Kragbalkens ein zweites Heizelement angeordnet.

Die Ausnehmung, in welche die Kragbalken hineinragen, kann beispielsweise ein Rechteck mit Kantenlängen von nicht mehr als 2 mm, insbesondere nicht mehr als 1 mm umfassen, wobei die Kragbalken mit einer Länge von einigen 100 $\mu$m, beispielsweise 300 $\mu$m bis 500 $\mu$m in die Ausnehmung hineinragen, wobei die Längsachsen der Kragbalken zueinander einen Abstand von einigen 10 bis beispielsweise 200 $\mu$m aufweisen. Die Kragbalken können insbesondere von gegenüberliegenden Seiten der Ausnehmung in diese hineinragen. Die Heiz- und Temperatursensorelemente der verschiedenen Kragbalken können beispielsweise von einer gemeinsamen Querebene geschnitten werden, die senkrecht zu den Kragbalkenlängsachsen verläuft. Dies bedingt das die relevante thermische Kopplung zwischen den Heiz- und Temperatursensorelementen verschiedener Kragbalken über das Gasgemisch verläuft. Da der Abstand sehr gering ist, sind die Zeitskalen für den Wärmetransport zwischen Heiz- und Temperatursensorelementen entsprechend kurz, was eine kurze Reaktionszeit der Messanordnung bei einer Veränderung der Zusammensetzung des Gasgemischs ermöglicht.

In einer Weiterbildung der Erfindung ist ein zweites kragbalkenseitiges Temperatursensorelement zum Erfassen einer Temperatur des Gasgemischs in dem freien Endabschnitt des zweiten Kragbalkens mit einem temperaturabhängigen Widerstandswert angeordnet.

In einer Weiterbildung der Erfindung weist der Chip einen Randbereich auf, welcher die Ausnehmung umgibt, wobei in dem Randbereich ein Referenztemperatursensorelement angeordnet ist, wobei zwischen dem Referenztemperatursensorelement und dem freien Endabschnitten zumindest ein Abschnitt der Ausnehmung verläuft.

Die piezoelektrischen Wandler der Kragbalken sind gemäß einer Weiterbildung der Erfindung jeweils zwischen dem Abschnitt des Randbereichs, an dem der Kragbalken mit dem Chip verbunden ist, und dem Kragbalkenseitigen Temperatursensorelement bzw. Heizelement angeordnet.

In einer Weiterbildung der Erfindung ist die Auswerte- und/oder Recheneinheit dazu eingerichtet, Temperaturmesswerte des Referenztemperatursensorelements als Temperaturmesswerte des zweiten Temperatursensorelements zu verwenden.

In einer Weiterbildung der Erfindung ist die Auswerte- und/oder Recheneinheit dazu eingerichtet, Temperaturmesswerte des zweiten kragbalkenseitiges Temperatursensorelement als Temperaturmesswerte des zweiten Temperatursensorelements zu verwenden.

In einer Weiterbildung der Erfindung ist die Auswerte und/oder Recheneinheit dazu eingerichtet ist, die Wärmeleitfähigkeit des Gasgemischs im stationären Zustand (steady state) oder in einem Transientenverfahren zu bestimmen.

Ein Beispiel zur Bestimmung der Wärmeleitfähigkeit im stationären Zustand ist beispielsweise in einer Produktinformation zum XEN-TC3880 der Firma Xensor beschrieben.

Eine Bestimmung der Wärmeleitfähigkeit im Transientenverfahren ist beispielsweise beschrieben in Woodfield et al. Int. J. Thermophysics (2008) 29: 1299-1320 und in Gustafsson et al, 1979. Transient hotstrip method for simultaneously measuring thermal conductivity and thermal diffusivity of solids and fluids. Journal of Physics D: Applied

Eine Wärmeleitfähigkeitsmessung geht grundsätzlich von vernachlässigbaren Relativbewegungen zwischen dem Medium und der Messanordnung aus. In der vorliegenden Messanordnungen ist jedoch zumindest ein an der Messung beteiligtes Heizelement und ein beteiligtes Temperatursensorelement auf einem schwingfähigen Kragbalken angeordnet. So dass der Wärmetransport eine Scherwelle zu durchlaufen hat, wenn der Kragbalken schwingt. Das Ausmaß dieser Störung der Messung entspricht der Eindringtiefe der Scherwelle in das Gasgemisch, welche mit der Stärke δ der viskosen Randschicht abgeschätzt werden kann gemäß

$$\delta = \sqrt{\frac{\eta/\rho}{f}}$$

wobei $\eta$ und $\rho$ die dynamische Viskosität bzw. die Dichte des Mediums sind, und f die Schwingfrequenz des Kragbalkens angibt. Bei Frequenzen im Bereich von 10 kHz bis 100 kHz und einem Druck zwischen 0,1 MPa bis 1 MPa ergeben sich beispielsweise für Gase aus einer Liste, die Ar, N2, CH4, CO2, He, und H2 umfasst, Eindringtiefen zwischen einigen wenigen $\mu$m und etwa 100 $\mu$m. Je nach Abstand zwischen den an der Wärmeleitfähigkeitsmessung beteiligten Heiz- und Temperatursensorelementen sind die Eindringtiefen daher vernachlässigbar oder eben nicht. Wenn die Eindringtiefe beispielsweise weniger als 1 % der Abstände beträgt kann es zu hinreichend genauen Ergebnissen führen, die Wärmeleitfähigkeitsmessung bei schwingenden Kragbalken durchzuführen. Wenn dagegen die Eindringtiefe 10% des Abstands oder mehr beträgt, kann es je nach Genauigkeitsanforderung geboten sein, die Wärmeleitfähigkeitsmessung in Schwingungspausen bei ruhendem Kragbalken durchzuführen. Weiterhin kann der Einfluss der Schwingungen auf die Wärmeleitfähigkeitsmessung ermittelt werden, indem Messung der Wärmeleitfähigkeit bei schwingendem und ruhendem Kragbalken durchgeführt wird, wobei aus den Abweichungen zwischen den Messergebnissen Korrekturwerte ermittelt werden, mit denen anschließend vorläufige Ergebnisse einer Wärmeleitfähigkeitsmessung bei schwingendem Kragbalken korrigiert werden können. Die Korrekturwerte können beispielsweise im Rahmen einer Werkskalibrierung ermittelt und ggf. durch ein entsprechendes Modell beschrieben werden. Gleichermaßen kann im laufenden Messbetrieb periodisch oder ereignisgesteuert, beispielsweise nach Feststellung eines Wechsels der Gaszusammensetzung anhand der Messwerte für Dichte, Viskosität und Wärmeleitfähigkeit.

In einer Weiterbildung der Erfindung ist die Auswerte- und/oder Recheneinheit dazu eingerichtet, die spezifische Wärmekapazität des Gasgemischs in einem Verfahren mit veränderlicher Heizleistung des ersten Heizelements zu ermitteln, wobei der Temperaturverlauf des zweiten Temperatursensorelements in Reaktion auf den Heizleistungsverlauf des ersten Heizelements ausgewertet wird, um ein Produkt aus spezifischer Wärmekapazität und Dichte des Gasgemischs zu ermitteln. Die Verfahren zum Ermitteln der spezifischen Wärmekapazität sind grundsätzlich bekannt und beispielsweise beschrieben in den oben genannten Artikeln von Woodfield et al. und Gustafsson et al.

In einer ersten Ausgestaltung dieser Weiterbildung der Erfindung wird in dem Verfahren die Sprungantwort des zweiten Temperatursensorelements auf einen Heizleistungssprung des ersten Heizelements ausgewertet.

In einer zweiten Ausgestaltung dieser Weiterbildung der Erfindung wird der Verlauf der Temperatur des zweiten Temperatursensorelements in Reaktion auf eine harmonische Anregung des ersten Heizelements hinsichtlich Phase und Amplitude ausgewertet.

In einer Weiterbildung der Erfindung ist die Auswerte und/oder Recheneinheit dazu eingerichtet, die spezifische Wärmekapazität mittels Division des Produkts durch die auf Basis der Schwingfrequenz eines der Kragbalken ermittelten Dichte zu bestimmen.

In einer Weiterbildung der Erfindung Vorrichtung weist mindestens ein Kragbalken eine funktionalisierte Oberfläche zur selektiven Adsorption einer Spezies, insbesondere Wasser aus einem die Vorrichtung umgebenden Gasgemisch auf, wobei die Auswerte- und/oder Recheneinheit ferner dazu eingerichtet ist die Menge der adsorbierten Spezies mittels des Heizelement des Kragbalkens zu beeinflussen und anhand der gemessenen Frequenz des schwingenden Kragbalkens im Vergleich zu mindestens einer Referenzfrequenz die Menge der adsorbierten Spezies zu ermitteln.

In einer Weiterbildung der Erfindung umfasst die mindestens eine Referenzfrequenz eine Frequenz des Kragbalkens bei vollständiger Desorption der Spezies und/oder die Frequenz eines nicht funktionalisierten Kragbalkens.

In einer Weiterbildung der Erfindung weist der Chip eine funktionsabhängig strukturierte Schichtfolge auf, die auf dem SOI-Substrat präpariert ist mit einer Oxidschicht, einer Haftvermittlerschicht einer ersten Elektrodenschicht; einer piezoelektrischen Schicht, einer zweiten Elektrodenschicht und einer Passivierungsschicht, wobei der piezoelektrische Wandler oder die piezoelektrischen Wandler Bereiche der beiden Elektrodenschichten und der piezoelektrischen Schicht umfasst bzw. umfassen, wobei die Temperatursensorelemente jeweils durch Strukturieren eines Bereichs einer Elektrodenschicht, insbesondere der ersten Elektrodenschicht gebildet sind, wobei das erste Heizelement oder die Heizelemente jeweils durch Strukturieren eines Bereichs einer der Elektrodenschichten, insbesondere der zweiten Elektrodenschicht gebildet ist bzw. sind, wobei die Haftvermittlerschicht und die piezoelektrische Schicht insbesondere Aluminiumnitrid aufweisen, wobei die erste und die zweite Elektrodenschicht insbesondere Platin aufweisen, und wobei die Passivierungsschicht insbesondere Aluminiumoxid aufweist. Die Verfahrensschritte zum Präparieren und Strukturieren der obigen Schichtfolge sind in der noch unveröffentlichten Patentanmeldung DE 10 2019 123 874.9 beschrieben. Die dort nicht erwähnte Passivierungsschicht kann beispielsweise mittels ALD (Atomic Layer Deposition) präpariert werden.

Die Erfindung wird nun anhand der in den Zeichnungen dargestellten Ausführungsbeispiele näher erläutert. Es zeigt:

Fig 1: einen schematischen Längsschnitt durch einen Kragbalken eines Ausführungsbeispiels einer erfindungsgemäßen Vorrichtung;

Fig. 2: eine Aufsicht auf einen Chip eines ersten Ausführungsbeispiels einer erfindungsgemäßen Vorrichtung;

Fig. 3: eine Aufsicht auf einen Chip eines zweiten Ausführungsbeispiels einer erfindungsgemäßen Vorrichtung; und

Fig. 4: eine schematische Gesamtansicht eines Ausführungsbeispiels einer erfindungsgemäßen Vorrichtung.

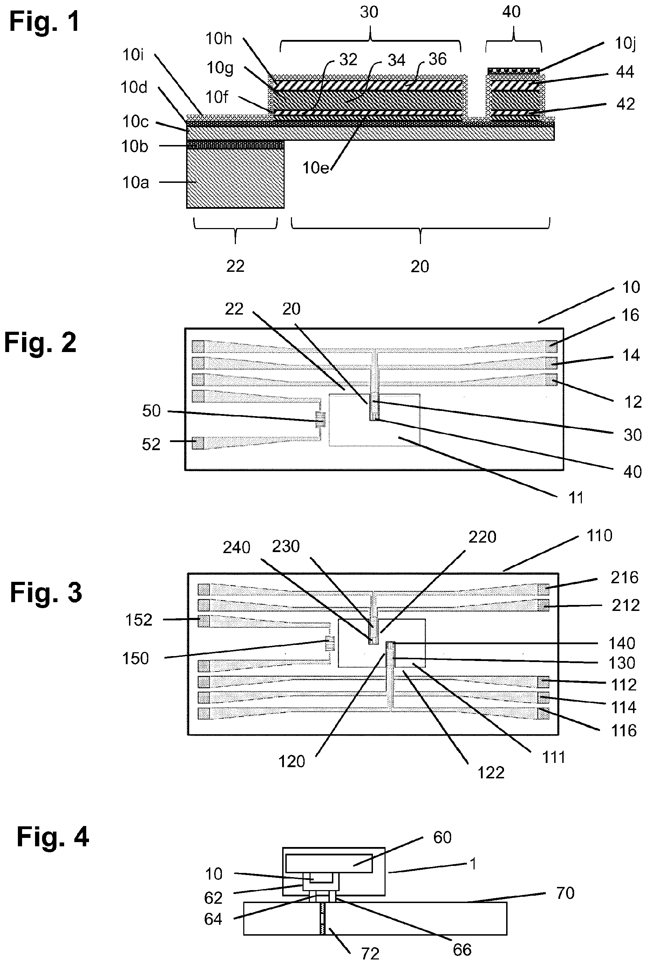

Fig. 1 zeigt einen Schichtaufbau eines einzelnen Kragbalkens 20 eines Chips einer erfindungsgemäßen Vorrichtung im Längsschnitt, wobei der Schichtaufbau vorzugsweise im Waferverband präpariert und strukturiert wird, bevor die Vereinzelung der Chips erfolgt. Beispielsweise kann ein SOI-Wafer (SOI steht für Silicon-on-Insulator) als Grundlage zur Herstellung des Kragbalkens 20 dienen. Ein derartiger SOI-Wafer weist eine dünne Siliziumschicht 10c in einer Stärke von beispielsweis 3 bis 5 $\mu$m auf, die durch eine isolierende Schicht 10b, beispielsweise SiOz von einem Silizium-Substrat 10c getrennt ist. Auf die dünne Siliziumschicht 10c ist eine Isolationsschicht 10d aufgebracht. Die Isolationsschicht 10d kann beispielsweise eine Siliziumoxidschicht sein, die vorzugsweise über einen nassen Oxidationsschritt auf der dünnen Siliziumschicht 10c ausgebildet ist. Auf die Isolationsschicht 10d ist in einem nächsten Herstellungsschritt optional eine Haftvermittlerschicht 10e aufgebracht. Die Haftvermittlerschicht 10e kann beispielsweise Aluminiumnitrid (AIN) aufweisen, welches vorzugsweise mit einer Schichtdicke von kleiner 50 nm aufgebracht ist.

Auf die Haftvermittlerschicht 10e ist der piezoelektrische Wandler 30 aufgebracht. Der piezoelektrische Wandler 30 weist Bereiche einer Schichtfolge aus einer ersten elektrisch leitenden Elektrodenschicht 10f, die auf die Haftvermittlerschicht 10e aufgebracht ist, einer piezoelektrischen Schicht 10g, die mit einer Stärke von einigen 100 nm, beispielsweise 500 nm auf die erste Elektrodenschicht 10f aufgebracht ist, und eine zweite Elektrodenschicht 10h, die auf die piezoelektrische Schicht 10g aufgebracht ist, auf. Die Elektrodenschichten 10f, 10h können beispielsweise Platin aufweisen wobei die erste Elektrodenschicht 10f beispielsweise eine Stärke von etwa 20 bis 30 nm beträgt, während die zweite Elektrodenschicht 10h eine Stärke von etwa 150 bis 250 nm aufweist. Dieser Schichtaufbau ist insoweit typisch für die Kragträger der Chips der erfindungsgemäßen Vorrichtung.

An dem freien Ende des Kragträgers 20 sind noch ein Temperatursensorelement 42 und ein Heizelement 44 in den beiden Elektrodenschichten 10f, 10h präpariert. Dies kann beispielsweise durch einen Lift-off Prozess erfolgen. Bevorzugt werden die Elektrodenschichten dabei so strukturiert, dass sie mäanderförmige Strukturen als Temperatursensorelement bzw. als Heizelement aufweisen, wobei das Heizelement einen Widerstand von wenigen 100 Ohm aufweist, während der Widerstand des Temperatursensorelements 1 bis 2 Kiloohm beträgt. Die Länge des Kragbalkens beträgt beispielsweise 300 bis 500 $\mu$m, so dass sich Schwingfrequenzen in der Größenordnung von 20 bis 80 kHz ergeben.

Das Temperatursensorelement 42 und das Heizelement 42 werden zusammen als thermischer Funktionsblock 40 bezeichnet der durch einen Isolationsgraben mit einer Breite von einigen $\mu$m vom piezoelektrischen Wandler getrennt ist.

Die gesamte Oberfläche des Chips ist mit einer Passivierungsschicht aus Aluminiumoxid in einer Stärke von einigen 10 nm beschichtet, beispielsweise in einem ALD-Verfahren.

Optional kann auf dem thermischen Funktionsblock oberhalb der Passivierungsschicht noch eine selektiv adsorbierende Schicht 10j abgeschieden sein, beispielsweise eine hygroskopische Schicht, wie ein Hydrogel, ein Zeolith oder ein Silikagel. Durch Temperaturbeeinflussung mit dem Heizelement 44, kann die Adsorption bzw. Desorption einer Spezies gesteuert werden, Wobei die adsorbierte Menge über die Schwingfrequenz des Kragbalkens ermittelbar ist.

Zur Vergrößerung der Sensitivität, kann die adsorbierende Schicht 10j auch auf dem piezoelektrischen Wandler 30 deponiert werden, wobei dann vorzugsweise auch der Bereich der zweiten Elektrodenschicht 10h, die eine Elektrode des piezoelektrischen Wandlers 30 bildet, als Heizelement strukturiert ist.

Fig. 2 zeigt eine Aufsicht auf einen Chip 10, dessen Kragbalken 20 in Fig. 1 dargestellt ist. Der Kragbalken 20 ist durch Präparieren einer Ausnehmung 11, mittels DRIE freigestellt. Das Temperatursensorelement des thermischen Funktionsblocks 40 ist über ein in der ersten Elektrodenschicht präpariertes erstes Leiterbahnpaar 12 kontaktiert. Das Heizelement des thermischen Funktionsblocks 40 ist über ein in der zweiten Elektrodenschicht präpariertes zweites Leiterbahnpaar 14 kontaktiert. Die Elektroden des piezoelektrischen Wandlers 30 sind über ein drittes Leiterbahnpaar 16 kontaktiert, das jeweils eine Leiterbahn in einer Elektrodenschicht aufweist. Ein Referenztemperatursensorelement 50 im Randbereich 22 des Chips 10 und das sie kontaktierende vierte Leiterbahnpaar 52 sind in der ersten Elektrodenschicht präpariert.

Fig. 3 zeigt eine Aufsicht auf einen Chip 110 dessen Kragbalken 120, 220 durch Präparieren einer Ausnehmung 111 mittels DRIE freigestellt sind. Die Kragbalken weisen jeweils einen thermischen Funktionsblock 140, 240 und einen piezoelektrische Wandler 130, 230 auf. Für den ersten Kragbalken 120 gilt das folgende Kontaktierungsschema: Das erste Temperatursensorelement des ersten thermischen Funktionsblocks 140 ist über ein in der ersten Elektrodenschicht präpariertes erstes Leiterbahnpaar 112 kontaktiert. Das Heizelement des thermischen Funktionsblocks 140 ist über ein in der zweiten Elektrodenschicht präpariertes zweites Leiterbahnpaar 114 kontaktiert. Die Elektroden des ersten piezoelektrischen Wandlers 130 sind über ein drittes Leiterbahnpaar 116 kontaktiert, das jeweils eine Leiterbahn in einer Elektrodenschicht aufweist. Für den zweiten Kragbalken 220 gilt das folgende Kontaktierungsschema: Das zweite Temperatursensorelement des zweiten thermischen Funktionsblocks 240 ist über ein in der ersten Elektrodenschicht präpariertes erstes Leiterbahnpaar 212 kontaktiert. Die Elektroden des ersten piezoelektrischen Wandlers 230 sind über ein drittes Leiterbahnpaar 216 kontaktiert, das jeweils eine Leiterbahn in einer Elektrodenschicht aufweist. Ein Referenztemperatursensorelement 150 im Randbereich 122 des Chips 110 und das sie kontaktierende vierte Leiterbahnpaar 152 sind der ersten Elektrodenschicht präpariert.

Fig 4. Zeigt einen typischen Aufbau eines Ausführungsbeispiels der erfindungsgemäßen Vorrichtung 1, die an eine Rohrleitung 70 angeschlossen ist, um ein in der Rohrleitung geführtes Gasgemisch zu analysieren. Die Vorrichtung 1 umfasst den zuvor beschriebenen Chip 10, der in einer Probenkammer 62 angeordnet ist, die über Anschlussleitungen 64, 66 mit der 70 Rohrleitung kommuniziert, wobei zwischen Anschlusspunkten der Anschlussleitungen an die Rohrleitung 70 eine Blende 72 angeordnet ist, die bei einem Volumenstrom durch die Rohrleitung einen Druckgradienten bewirkt der wiederum einen Volumenstrom durch die Probenkammer 62 bewirkt, so dass der Chip stets mit einer aktuellen, repräsentativen Probe des Gasgemischs beaufschlagt wird. Die Vorrichtung 1 umfasst weiterhin eine Auswerteund/oder Recheneinheit 60, an welche der Chip 10 angeschlossen ist, und die dazu eingerichtet ist, anhand der Schwingungseigenschaften des mindestens der Kragbalkens die Dichte und Viskosität des Gasgemischs zu bestimmen, und anhand von Temperaturmesswerten des ersten kragbalkenseitigen Temperatursensorelements und des zweiten Temperatursensorelements; sowie der Leistungsaufnahme des Heizelements die Wärmeleitfähigkeit und/oder die spezifische Wärmekapazität des Gasgemischs zu bestimmen. Sofern ein Kragbalken eine funktionalisierte Oberfläche aufweist, kann auch spezifisch die Konzentration einer Spezies bestimmt werden.

Der besondere Vorteil der vorliegenden Erfindung liegt insbesondere darin, dass die thermischen Funktionsblöcke mit Temperatursensor- bzw. Heizelementen so zueinander an den frei schwingenden Enden von schwingfähigen Kragträgern positioniert sind, dass eine zuverlässige Messung der thermophysikalischen Parameter wie Wärmeleitfähigkeit und Wärmekapazität eines Gasgemischs, welches die Kragträger umgibt mit großer Genauigkeit möglich ist. Da die mechanischen Eigenschaften des Gasgemischs, also Dichte und Viskosität über Schwingfrequenz und Schwingungsdämpfung der Schwingungen der gleichen Kragträgern und damit praktisch am gleichen Ort gemessen werden, stammen die unterschiedlichen Messdaten von der identischen Probe im praktisch gleichen thermodynamischen Zustand. Dies ermöglicht eine hochgenaue Messung mit einem extrem geringen Aufwand. Damit kann insbesondere das Verfahren gemäß WO 2018 082 875 A1 noch genauer und kostengünstiger realisiert werden. Gleichermaßen lassen sich die Verfahren zur Messung der Wärmeleitfähigkeit bzw. der spezifischen Wärmekapazität gemäß, Woodfield et al. oder Gustafsson et al mit erheblich reduziertem Aufwand durchführen. Für die Vorgehensweise zur Feuchtemessung bzw. Konzentrationsbestimmung durch Adsorption einer Spezies sei auf die noch unveröffentlichte Patentanmeldung DE 10 2019 123 874.9 verwiesen.

## Patentansprüche

1. Vorrichtung zum Bestimmen erstens einer Wärmeleitfähigkeit und/oder der spezifischen Wärmekapazität eines Gasgemischs und zweitens einer Dichte und/oder einer Viskosität des Gasgemischs, umfassend:

   einen aus einem Halbleiterwafer, insbesondere einem SOI-Wafer präparierten Chip (10; 110) mit zumindest einem ersten schwingfähigen Kragbalken (20; 120) mit einem ersten piezoelektrischen Wandler (30; 130), der zum Anregen einer Schwingung des Kragbalkens (20; 120) mit einer ersten Frequenz dient, wobei der Chip (10; 110) eine Ausnehmung (11; 111) aufweist, in welche Ausnehmung der erste Kragbalken (20) mit einem schwingfähigen freien Endabschnitt kragt;
   zumindest ein erstes Temperatursensorelement (42) mit einem temperaturabhängigen Widerstandswert zum Erfassen einer Temperatur des Gasgemischs;
   zumindest ein zweites Temperatursensorelement (50) mit einem temperaturabhängigen Widerstandswert zum Erfassen einer Temperatur des Gasgemischs;
   zumindest ein erstes Heizelement (44); und
   eine Auswerte- und/oder Recheneinheit (60), die dazu eingerichtet ist, anhand der Schwingungseigenschaften des mindestens einen Kragbalkens (20; 120) die Dichte und Viskosität des Gasgemischs zu bestimmen, und anhand von Temperaturmesswerten des ersten Temperatursensorelements (42) und des zweiten Temperatursensorelements (50; 150, 240) sowie der Leistungsaufnahme des Heizelements (44) die Wärmeleitfähigkeit und/oder die spezifische Wärmekapazität des Gasgemischs zu bestimmen;
   **dadurch gekennzeichnet, dass**
   das erste Temperatursensorelement in dem freien Endabschnitt des ersten Kragbalkens ausgebildet ist,
   das zweite Temperatursensorelement (50) beabstandet von dem ersten Kragbalken (20; 120) angeordnet ist,
   das erste Heizelement (44) in dem freien Endabschnitt des Kragbalkens (20; 120) ausgebildet ist, und
   zwischen dem ersten Heizelement (44) und dem zweiten Temperatursensorelement (50; 150, 240), zumindest ein Abschnitt der Ausnehmung (11; 111) verläuft.

2. Vorrichtung (1) nach Anspruch 1, wobei der Chip (110) einen zweiten schwingfähigen Kragbalken (220) aufweist mit einem zweiten piezoelektrischen Wandler (230), der zum Anregen einer Schwingung mit einer zweiten Frequenz dient, wobei der zweite Kragbalken (120) mit einem schwingfähigen freien Endabschnitt in die Ausnehmung kragt, und der dem Gasgemisch aussetzbar ist.

3. Vorrichtung (1) nach Anspruch 2, wobei ein zweites kragbalkenseitiges Temperatursensorelement (240) zum Erfassen einer Temperatur des Gasgemischs mit einem temperaturabhängigen Widerstandswert in dem freien Endabschnitt des zweiten Kragbalkens (220) ausgebildet ist.

4. Vorrichtung (1) nach Anspruch 2 oder 3, wobei in dem freien Endabschnitt des zweiten Kragbalkens (220) ein zweites Heizelement angeordnet ist.

5. Vorrichtung (1) nach einem der vorhergehenden Ansprüche, wobei der Chip einen Randbereich aufweist, welcher die Ausnehmung umgibt, wobei in dem Randbereich ein Referenztemperatursensorelement angeordnet ist, wobei zwischen dem Referenztemperatursensorelement und dem freien Endabschnitten zumindest ein Abschnitt der Ausnehmung verläuft.

6. Vorrichtung (1) nach Anspruch 5, wobei die Auswerte- und/oder Recheneinheit (50) dazu eingerichtet ist, Temperaturmesswerte des Referenztemperatursensorelements als Temperaturmesswerte des zweiten Temperatursensorelements zu verwenden.

**7.** Vorrichtung (1) nach einem der Ansprüche 3 bis 5, wobei die Auswerte- und/oder Recheneinheit (50) dazu eingerichtet ist, Temperaturmesswerte des zweiten kragbalkenseitiges Temperatursensorelement als Temperaturmesswerte des zweiten Temperatursensorelements zu verwenden.

**8.** Vorrichtung (1) nach einem der vorhergehenden Ansprüche, wobei die Auswerte und/oder Recheneinheit dazu eingerichtet ist, die Wärmeleitfähigkeit des Gasgemischs im stationären Zustand (steady state) oder in einem Transientenverfahren zu bestimmen.

**9.** Vorrichtung (1) nach einem der vorhergehenden Ansprüche, wobei die Auswerte und/oder Recheneinheit dazu eingerichtet ist, die spezifische Wärmekapazität des Gasgemischs in einem Verfahren mit veränderlicher Temperatur des ersten Heizelements zu ermitteln, wobei der Temperaturverlauf des zweiten Temperatursensorelements Temperatursensorelements in Reaktion auf den Temperaturverlauf des ersten Heizelements ausgewertet wird, um ein Produkt aus spezifischer Wärmekapazität und Dichte des Gasgemischs zu ermitteln.

**10.** Vorrichtung (1) nach Anspruch 9, wobei in dem Verfahren die Sprungantwort des zweiten Temperatursensorelements auf einen Temperatursprung des ersten Heizelements ausgewertet wird.

**11.** Vorrichtung (1) nach Anspruch 9 oder 10, wobei der Verlauf der Temperatur des zweiten Temperatursensorelements in Reaktion auf eine harmonische Anregung des ersten Heizelements hinsichtlich Phase und Amplitude ausgewertet werden.

**12.** Vorrichtung (1) nach einem der Ansprüche, 9 bis 11 wobei die Auswerte und/oder Recheneinheit dazu eingerichtet ist, die spezifische Wärmekapazität mittels Division des Produkts durch die auf Basis der Schwingfrequenz eines der Kragbalken ermittelten Dichte zu bestimmen.

**13.** Vorrichtung (1) nach einem der vorhergehenden Ansprüche, wobei mindestens ein Kragbalken eine funktionalisierte Oberfläche (10j) zur selektiven Adsorption einer Spezies, insbesondere Wasser aus einem die Vorrichtung (1) umgebenden Gasgemisches aufweist, wobei die Auswerte- und/oder Recheneinheit ferner dazu eingerichtet ist, die Menge der adsorbierten Spezies mittels des Heizelement des Kragbalkens zu beeinflussen, und anhand der gemessenen Frequenz des schwingenden Kragbalkens im Vergleich zu mindestens einer Referenzfrequenz zu ermitteln.

**14.** Vorrichtung (1) nach Anspruch 9, wobei die mindestens eine Referenzfrequenz eine Frequenz des Kragbalkens bei vollständiger Desorption der Spezies und/oder die Frequenz eines nicht funktionalisierten Kragbalkens umfasst.

**15.** Vorrichtung (1) nach einem der vorhergehenden Ansprüche,

wobei der Chip (10) eine funktionsabhängig strukturierte Schichtfolge aufweist, die auf dem SOI-Substrat (10a, 10b, 10c) präpariert ist mit einer Oxidschicht (10d), einer Haftvermittlerschicht (10e) einer ersten Elektrodenschicht (10f); einer piezoelektrischen Schicht (10g), einer zweiten Elektrodenschicht (10h) und einer Passivierungsschicht (10i),
wobei der piezoelektrische Wandler oder die piezoelektrischen Wandler (30; 130, 230) Bereiche der beiden Elektrodenschichten (10f, 10h) und der piezoelektrischen Schicht (10g) umfasst bzw. umfassen,
wobei die Temperatursensorelemente jeweils durch Strukturieren eines Bereichs einer der Elektrodenschichten (10f, 10h), insbesondere der ersten Elektrodenschicht (10f) gebildet sind,
wobei das erste Heizelement oder die Heizelemente jeweils durch Strukturieren eines Bereichs einer Elektrodenschicht (10f, 10h), insbesondere der zweiten Elektrodenschicht (10h) gebildet ist bzw. sind,
wobei die Haftvermittlerschicht (10e) und die piezoelektrische Schicht (10g) insbesondere Aluminiumnitrid aufweisen,
wobei die erste und die zweite Elektrodenschicht (10f, 10h) insbesondere Platin aufweisen, und
wobei die Passivierungsschicht (10j) insbesondere Aluminiumoxid aufweist.

**Claims**

**1.** A device for determining, firstly, a thermal conductivity and/or the specific thermal capacity of a gas mixture and, secondly, a density and/or a viscosity of the gas mixture, comprising:

a chip prepared from a semiconductor wafer, in particular an SOI wafer (10; 110), with at least a first cantilever that can oscillate (20; 120) with a first piezoelectric converter (30; 130) which is used to initiate an oscillation of the cantilever (20; 120) with a first frequency, wherein the chip (10; 110) has a recess (11; 111) into which a free end section of the first cantilever (20) that can oscillate projects;
at least a first temperature sensor element (42) with a temperature-dependent resistance value for detecting a temperature of the gas mixture;

at least a second temperature sensor element (50) with a temperature-dependent resistance value for detecting a temperature of the gas mixture; at least a first heating element (44); and an evaluation and/or calculation unit (60) which is configured to determine the density and viscosity of the gas mixture based on the oscillation properties of the at least one cantilever (20; 120), and to determine the thermal conductivity and/or the specific thermal capacity of the gas mixture based on measured temperature values of the first temperature sensor element (42) and the second temperature sensor element (50; 150, 240), as well as the power consumption of the heating element (44);
**characterized in that**
the first temperature sensor element is formed in the free end section of the first cantilever, the second temperature sensor element (50) is positioned at a distance from the first cantilever (20; 120),
the first heating element (44) is formed in the free end section of the cantilever (20; 120), and at least one section of the recess (11; 111) extends between the first heating element (44) and the second temperature sensor element (50; 150, 240).

2. The device (1) as claimed in claim 1, wherein the chip (110) has a second cantilever that can oscillate (220) with a second piezoelectric converter (230) which is used to initiate an oscillation with a second frequency, wherein a free end section of the second cantilever (120) that can oscillate projects into the recess, and said second cantilever can be exposed to the gas mixture.

3. The device (1) as claimed in claim 2, wherein a second temperature sensor element on the cantilever side (240) for detecting a temperature of the gas mixture with a temperature-dependent resistance value is formed in the free end section of the second cantilever (220).

4. The device (1) as claimed in claim 2 or 3, wherein a second heating element is arranged in the free end section of the second cantilever (220).

5. The device (1) as claimed in one of the preceding claims, wherein the chip has an edge area which surrounds the recess, wherein a reference temperature sensor element is arranged in the edge area, wherein at least one section of the recess extends between the reference temperature sensor element and the free end section.

6. The device (1) as claimed in claim 5, wherein the evaluation and/or calculation unit (50) is configured to use measured temperature values of the reference temperature sensor element as measured temperature values of the second temperature sensor element.

7. The device (1) as claimed in one of claims 3 to 5, wherein the evaluation and/or calculation unit (50) is configured to use measured temperature values of the second temperature sensor element on the cantilever side as measured temperature values of the second temperature sensor element.

8. The device (1) as claimed in one of the preceding claims, wherein the evaluation and/or calculation unit is configured to determine the thermal conductivity of the gas mixture in a steady state or in a transient process.

9. The device (1) as claimed in one of the preceding claims, wherein the evaluation and/or calculation unit is configured to determine the specific thermal capacity of the gas mixture in a process where the temperature of the first heating element changes, wherein the temperature profile of the second temperature sensor element in response to the temperature profile of the first heating element is evaluated in order to determine a product of the specific thermal capacity and density of the gas mixture.

10. The device (1) as claimed in claim 9, wherein during the process, the step response of the second temperature sensor element to a change in temperature of the first heating element is evaluated.

11. The device (1) as claimed in claim 9 or 10, wherein the temperature profile of the second temperature sensor element in response to a harmonic excitation of the first heating element is evaluated with regard to phase and amplitude.

12. The device (1) as claimed in one of claims 9 to 11, wherein the evaluation and/or calculation unit is configured to determine the specific thermal capacity by dividing the product by the density calculated based on the oscillation frequency of one of the cantilevers.

13. The device (1) as claimed in one of the preceding claims, wherein at least one cantilever has a functionalized surface (10j) for selective adsorption of a species, in particular water from a gas mixture surrounding the device (1), wherein the evaluation and/or calculation unit is also configured to influence the quantity of the adsorbed species using the heating element of the cantilever, and to determine the quantity of the adsorbed species based on the measured frequency of the oscillating cantilever in comparison to at least one reference frequency.

**14.** The device (1) as claimed in claim 9, wherein the at least one reference frequency comprises a frequency of the cantilever when the species is fully desorbed and/or the frequency of a non-functionalized cantilever.

**15.** The device (1) as claimed in one of the preceding claims,

wherein the chip (10) has a function-dependent structured sequence of layers which is prepared on the SOI substrate (10a, 10b, 10e) with an oxide layer (10d), an adhesion agent layer (10e), a first electrode layer (10f); a piezoelectric layer (10g), a second electrode layer (10h), and a passivation layer (10i),

wherein the piezoelectric converter or the piezoelectric converters (30; 130, 230) comprises or comprise areas of the two electrode layers (10f, 10h) and the piezoelectric layer (10g),

wherein the temperature sensor elements are respectively formed by structuring an area of one of the electrode layers (10f, 10h), in particular the first electrode layer (10f),

wherein the first heating element or the heating elements is or are respectively formed by structuring an area of an electrode layer (10f, 10h), in particular the second electrode layer (10h),

wherein the adhesion agent layer (10e) and the piezoelectric layer (10g) contain aluminum nitride in particular,

wherein the first and the second electrode layer (10f, 10h) contain platinum in particular, and

wherein the passivation layer (10j) contains aluminum oxide in particular.

## Revendications

**1.** Dispositif destiné à la détermination, premièrement, d'une conductivité thermique et/ou de la capacité thermique spécifique d'un mélange gazeux et, deuxièmement, d'une densité et/ou d'une viscosité du mélange gazeux, lequel dispositif comprend :

une puce (10 ; 110) préparée à partir d'une plaquette de semi-conducteur, notamment une plaquette SOI, avec au moins une première barre en porte-à-faux (20 ; 120) apte à vibrer, avec un premier transducteur piézoélectrique (30 ; 130), lequel sert à générer une vibration de la barre en porte-à-faux (20 ; 120) à une première fréquence, la puce (10 ; 110) présentant un évidement (11 ; 111), évidement dans lequel la première barre en porte-à-faux (20) fait saillie avec une section d'extrémité libre apte à vibrer ;

au moins un premier élément de capteur de température (42) avec une valeur de résistance dépendant de la température, lequel premier élément est destiné à mesurer une température du mélange gazeux ;

au moins un deuxième élément de capteur de température (50) avec une valeur de résistance dépendant de la température, lequel deuxième élément est destiné à mesurer une température du mélange de gazeux ;

au moins un premier élément chauffant (44) ; et

une unité d'évaluation et/ou de calcul (60), laquelle est conçue pour déterminer la densité et la viscosité du mélange gazeux à l'aide des propriétés de vibration de l'au moins une barre en porte-à-faux (20 ; 120), et pour déterminer la conductivité thermique et/ou la capacité thermique spécifique du mélange gazeux à l'aide des valeurs mesurées de température du premier élément capteur de température (42) et du deuxième élément capteur de température (50 ; 150, 240) ainsi que de la puissance absorbée de l'élément chauffant (44) ;

**caractérisé en ce que**

le premier élément de capteur de température est configuré dans la section d'extrémité libre de la première barre en porte-à-faux,

le deuxième élément de capteur de température (50) est disposé à une certaine distance de la première barre en porte-à-faux (20 ; 120),

le premier élément chauffant (44) est formé dans la section d'extrémité libre de la barre en porte-à-faux (20 ; 120), et

au moins une partie de l'évidement (11 ; 111) s'étendant entre le premier élément chauffant (44) et le deuxième élément de capteur de température (50 ; 150, 240).

**2.** Dispositif (1) selon la revendication 1, pour lequel la puce (110) comprend une deuxième barre en porte-à-faux vibrante (220) avec un deuxième transducteur piézoélectrique (230), lequel sert à générer une vibration à une deuxième fréquence, la deuxième barre en porte-à-faux (120) faisant saillie dans l'évidement avec une section d'extrémité libre vibrante, et laquelle deuxième barre peut être exposée au mélange gazeux.

**3.** Dispositif (1) selon la revendication 2, pour lequel un deuxième élément de capteur de température (240) côté barre en porte-à-faux est configuré pour mesurer une température du mélange gazeux avec une valeur de résistance dépendant de la température dans la section d'extrémité libre de la deuxième barre en porte-à-faux (220).

**4.** Dispositif (1) selon la revendication 2 ou 3, pour lequel un deuxième élément chauffant est disposé dans la section d'extrémité libre de la deuxième barre en porte-à-faux (220).

**5.** Dispositif (1) selon l'une des revendications précédentes, pour lequel la puce présente une zone de bordure qui entoure l'évidement, un élément de capteur de température de référence étant disposé dans la zone de bordure, au moins une section de l'évidement s'étendant entre l'élément de capteur de température de référence et la section d'extrémité libre.

**6.** Dispositif (1) selon la revendication 5, pour lequel l'unité d'évaluation et/ou de calcul (50) est conçue pour utiliser des valeurs mesurées de température de l'élément de capteur de température de référence comme valeurs mesurées de température du deuxième élément de capteur de température.

**7.** Dispositif (1) selon l'une des revendications 3 à 5, pour lequel l'unité d'évaluation et/ou de calcul (50) est conçue pour utiliser des valeurs mesurées de température du deuxième élément de capteur de température côté barre en porte-à-faux comme valeurs mesurées de température du deuxième élément de capteur de température.

**8.** Dispositif (1) selon l'une des revendications précédentes, pour lequel l'unité d'évaluation et/ou de calcul est conçue pour déterminer la conductivité thermique du mélange gazeux à l'état stationnaire ("steady state") ou dans un procédé transitoire.

**9.** Dispositif (1) selon l'une des revendications précédentes, pour lequel l'unité d'évaluation et/ou de calcul est conçue pour déterminer la capacité thermique spécifique du mélange gazeux dans un procédé avec une température variable du premier élément chauffant, l'évolution de la température du deuxième élément de capteur de température étant évaluée en réaction à l'évolution de la température du premier élément chauffant, afin de déterminer un produit de la capacité thermique spécifique et de la densité du mélange gazeux.

**10.** Dispositif (1) selon la revendication 9, pour lequel, dans le procédé, la réponse du deuxième élément de capteur de température à un saut de température du premier élément de chauffage est évaluée.

**11.** Dispositif (1) selon la revendication 9 ou 10, pour lequel l'évolution de la température du deuxième élément de capteur de température en réponse à une excitation harmonique du premier élément chauffant est évaluée en termes de phase et d'amplitude.

**12.** Dispositif (1) selon l'une des revendications 9 à 11, pour lequel l'unité d'évaluation et/ou de calcul est conçue pour déterminer la capacité thermique spécifique en divisant le produit par la densité déterminée sur la base de la fréquence de vibration de l'une des barres en porte-à-faux.

**13.** Dispositif (1) selon l'une des revendications précédentes, pour lequel au moins une barre en porte-à-faux présente une surface fonctionnalisée (10j) destinée à l'adsorption sélective d'une espèce, notamment de l'eau, à partir d'un mélange gazeux entourant le dispositif (1), l'unité d'évaluation et/ou de calcul étant en outre conçue pour influencer la quantité de l'espèce adsorbée au moyen de l'élément chauffant de la barre en porte-à-faux et pour déterminer ladite quantité à l'aide de la fréquence mesurée de la barre en porte-à-faux vibrante par rapport à au moins une fréquence de référence.

**14.** Dispositif (1) selon la revendication 9, pour lequel l'au moins une fréquence de référence comprend une fréquence de la barre en porte-à-faux lors de la désorption complète de l'espèce et/ou la fréquence d'une barre en porte-à-faux non fonctionnalisée.

**15.** Dispositif (1) selon l'une des revendications précédentes,

    pour lequel la puce (10) présente une séquence de couches structurée dépendant de la fonction, laquelle séquence est préparée sur le substrat SOI (10a, 10b, 10c) avec une couche d'oxyde (10d), une couche d'agent adhésif (10e) d'une première couche d'électrode (10f) ; une couche piézoélectrique (10g), une deuxième couche d'électrode (10h) et une couche de passivation (10i),

    le ou les transducteurs piézoélectriques (30 ; 130, 230) comprenant des zones des deux couches d'électrodes (10f, 10h) et de la couche piézoélectrique (10g),

    les éléments de capteur de température étant chacun formés par structuration d'une zone de l'une des couches d'électrode (10f, 10h), notamment la première couche d'électrode (10f),

    le premier élément chauffant ou les éléments chauffants étant formés chacun par structuration d'une zone d'une couche d'électrode (10f, 10h), notamment de la deuxième couche d'électrode (10h),

    la couche d'adhérence (10e) et la couche piézoélectrique (10g) comprenant notamment du nitrure d'aluminium,

    la première et la deuxième couche d'électrodes (10f, 10h) comprenant notamment du platine, et la couche de passivation (10j) comprenant notamment de l'oxyde d'aluminium.

**Fig. 1**

30   40

10h
10i
10g
10f
10d
10c
10b
10a

32   34   36

10j
44
42

10e

22   20

**Fig. 2**

22   20

50
52

10
16
14
12
30
40

11

**Fig. 3**

240   230   220   110

152
150

216
212
140
130
112
114
116

120   122   111

**Fig. 4**

60

10
62
64

1
70
66

72

**IN DER BESCHREIBUNG AUFGEFÜHRTE DOKUMENTE**

**In der Beschreibung aufgeführte Patentdokumente**

- WO 2017063795 A1
- DE 102019123874, Huber
- US 20160290849 A1
- WO 2018082875 A1
- WO 2017131670 A1

**In der Beschreibung aufgeführte Nicht-Patentliteratur**

- Cantilever-Schwingers in Kombination mit einer thermischen Leitfähigkeitsmessung zur Online-Überwachung eines mit. *Wasserstoff angereicherten Brenngases,* ISBN 978-3-8007-4683-5, 34
- **WOODFIELD et al.** *Int. J. Thermophysics,* 2008, vol. 29, 1299-1320
- **GUSTAFSSON et al.** Transient hot- strip method for simultaneously measuring thermal conductivity and thermal diffusivity of solids and fluids. *Journal of Physics D: Applied,* 1979